(19) Europäisches Patentamt
European Patent Office
Office européen des brevets

(11) Veröffentlichungsnummer: **0 452 774 B1**

(12) # EUROPÄISCHE PATENTSCHRIFT

(45) Veröffentlichungstag der Patentschrift: **08.03.95**

(21) Anmeldenummer: **91105572.1**

(22) Anmeldetag: **09.04.91**

(51) Int. Cl.[6]: **C08F 283/00**, C08L 51/08, C08L 101/00, //(C08F283/00, 220:24)

(54) **Perfluoralkylgruppen enthaltende Pfropfcopolymerisate.**

(30) Priorität: **20.04.90 DE 4012630**

(43) Veröffentlichungstag der Anmeldung:
**23.10.91 Patentblatt 91/43**

(45) Bekanntmachung des Hinweises auf die Patenterteilung:
**08.03.95 Patentblatt 95/10**

(84) Benannte Vertragsstaaten:
**BE DE FR GB**

(56) Entgegenhaltungen:
**EP-A- 0 127 061**
**EP-A- 0 156 155**
**EP-A- 0 157 138**
**EP-A- 0 339 862**
**US-A- 4 935 480**

**WPIL, FILE SUPPLIER, AN=85-034494 [06], Derwent Publications Ltd, London, GB; & JP-A-59 228 076**

**WPIL, FILE SUPPLIER, AN=90-373458 [50], Derwent Publications Ltd, London, GB; & JP-A-02 271 803**

(73) Patentinhaber: **BAYER AG**

**D-51368 Leverkusen (DE)**

(72) Erfinder: **Röttger, Jutta, Dr.**
**Andreas-Gryphius-Strasse 20**
**W-5000 Köln 80 (DE)**
Erfinder: **Passon, Karl-Heinz, Dr.**
**Brucknerstrasse 6**
**W-5090 Leverkusen 1 (DE)**
Erfinder: **Schroer, Wolf-Dieter, Dr.**
**Hofbrunnstrasse 4**
**W-8000 München 71 (DE)**
Erfinder: **Kortmann, Wilfried, D.I.**
**Hinterveserde 27**
**W-5992 Nachrodt-Wilblingwerde (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gegenstand der vorliegenden Erfindung sind wäßrige Dispersionen von Copolymerisaten und/oder Pfropfcopolymerisaten aus ethylenisch ungesättigten Perfluoralkylmonomeren und perfluoralkylgruppenfreien ethylenisch ungesättigten Monomeren, hergestellt durch Polymerisation in Gegenwart wäßriger, emulgatorfreier Polyurethandispersionen als Pfropfgrundlage, wobei die Polyurethane die folgenden Aufbaukomponenten eingebaut enthalten:

A) organische Polyisocyanate,

B) Partialester aus Fettsäuren und Polyolen,

C) Perfluoralkylgruppen enthaltende Verbindungen mit aktiven Wasserstoffatomen und

D) aktive Wasserstoffatome enthaltende Verbindungen mit Salzgruppen oder mit in Salzgruppen überführbaren Gruppen.

Bevorzugte ionische Gruppen sind Salzgruppen.

Wäßrige Copolymerisatdispersionen auf Basis von perfluoralkylgruppen-enthaltendenMonomeren sind bekannt. Sie liefern gute Oleophobausrüstungen auf vielen Substraten, wenn die Perfluoralkylreste linear sind und mindestens 6 C-Atome enthalten. Bei der Herstellung dieser Copolymerisatdispersionen durch Emulsionspolymerisation werden Emulgatoren oder Emulgatorsysteme verwendet, Je nach Emulgatorsystem erhält man anionisch oder kationisch stabilisierte Dispersionen, deren Lagerbeständigkeit durch Zusatz von nichtionischen Emulgatoren verbessert werden kann. Für die Textil- und Teppicholeophobierung sind, auch in Verbindung mit weiteren Ausrüstungsmitteln oder Textilhilfsmitteln, kationische Perfluoralkyl-(meth)acrylatcopolymerisatdispersionen besonders geeignet.

Die Wirksamkeit von Oleophobierungsmitteln auf Basis von Polyperfluoralkyl(meth)acrylatdispersionen ist wesentlich abhängig von der Konzentration an Perfluoralkylgruppen im Copolymer, von der Zusammensetzung des Copolymerisats und dessen Teilchengröße.

Auch die Art der verwendeten Emulgatoren beeinflußt die anwendungstechnischen Eigenschaften. Anwendungstechnisch ist es häufig erforderlich, daß bei der Oleophobausrüstung zusätzlich auch eine Hydrophobierung bewirkt wird.

Verfahren zur Herstellung wäßriger Dispersionen von Pfropfcopolymerisaten sind bekannt. Die Propfcopolymerisation unter Verwendung von Perfluoralkyl(meth)acrylaten in wäßriger Dispersion ist z.B. in der DE-OS 3 407 361 beschrieben. Die Verwendung wäßriger Polyurethandispersionen als Pfropfgrundlage wird in den DE-OS 3 407 362, 1 953 345 und 1 953 349 dargelegt.

Im Vergleich zu den bekannten PU-Pfropfgrundlagen (DE-OS 3 407 362) enthalten die erfindungsgemäßen PU-Dispersionen Perfluoralkylseitenketten sowie gesättigte und/oder ungesättigte Fettsäurepartialester.

In EP 339 862 sind nichtgepfropfte, wasserdispergierbare Polyurethane mit Fluoralkylgruppen in Form einer wäßrigen Dispersion beschrieben. Sie sind geeignet für Beschichtungen oder Folien. Aus JP 59/228 076-A sind ölabweisende Kompositionen zur Ausrüstung synthetischer Fasern für den Spinnprozeß bekannt; sie enthalten neben Gleitmitteln und oberflächenaktiven Substanzen blockierte Polyisocyanate und Isocyanat-reaktive Verbindungen, z.B. Polyoxyalkylene, mit Perfluoralkylgruppen. Acrylatmonomere und Pfropfung sind nicht vorgesehen.

Durch den Einbau von Perfluoralkylketten wird die Verträglichkeit von Pfropfgrundlage und Pfropfauflage verbessert, wodurch eine homogenere Verteilung der beiden Dispersionen und damit auch eine höhere Pfropfausbeute erhalten wird. Gleichzeitig wird auch eine bessere Verteilung der Perfluoralkylketten in den Latexteilchen erreicht. Die erhaltenen Dispersionen zeigen eine verbesserte Oleophobwirkung auf den damit ausgerüsteten Substraten.

Die in den PU-Dispersionen mitverwendeten langkettigen Fettsäurepartialester bewirken eine mit den herkömmlichen Systemen nicht erreichte Hydrophobie. Der Einbau ungesättigter Fettsäurepartialester in die Polymeren der Pfropfgrundlage bietet zusätzliche bepfropfbare Stellen.

Die zur Herstellung der Dispersionen notwendigen Emulgatoren wirken sich, besonders wenn sie in hohen Konzentrationen verwendet werden, nachteilig auf die Einstellung des gewünschten Hydrophobniveaus aus. Außerdem sind Emulgatoren häufig die Ursache dafür, daß die ausgerüsteten Waren ein hohes Schmutzrückhaltevermögen besitzen.

Zur Herstellung feinteiliger Dispersionen, die eben aufgrund dieser Feinteiligkeit sehr wirksam sind, müssen im allgemeinen Emulgatoren in nachteilig hohen Konzentrationen verwendet werden. Da die erfindungsgemäße Pfropfgrundlage selbstemulgierend wirkt, kann die üblicherweise zur Herstellung von Perfluoralkylcopolymerisatdispersionen eingesetzte Emulgatormenge deutlich reduziert werden, was sich positiv auf die genannten anwendungstechnischen Eigenschaften auswirkt.

Es wird nach der Verfahrensweise der Pfropfcopolymerisation polymerisiert, wobei unabhängig von der Pfropfausbeute die Gesamtmenge an polymerisierbaren Monomeren als "Pfropfauflage" bezeichnet wird.

Die Copolymerisation wird in Gegenwart von Polyurethanen als Pfropfgrundlage durchgeführt, die folgende Aufbaukomponenten eingebaut enthalten:

A) organische Polyisocyanate

B) Partialester aus Fettsäuren und Polyolen

C) perfluoralkylgruppen enthaltende Verbindungen mit aktiven Wasserstoffatomen, vorzugsweise Alkoholen

D) aktive Wasserstoffatome enthaltende Verbindungen mit Salzgruppen oder mit in Salzgruppen überführbaren Gruppen, vorzugweise Dihydroxyverbindungen.

Ausgangsmaterialien zur Herstellung der als Pfropfgrundlage verwendeten Polyurethandispersionen sind;

A) Beliebige organische Polyisocyanate, vorzugsweise Diisocyanate der allgemeinen Formel

$Q(NCO)_2$ (I)

in welcher

Q für einen aliphatischen, cycloaliphatischen, aromatischen oder araliphatischen Kohlenwasserstoffrest steht.

Beispiele für die bevorzugten Verbindungen der Formel (I) sind Tetramethylendiisocyanat, Hexamethylendiisocyanat, 1,4-Diisocyanatocyclohexan, 3-Isocyanatomethyl-3,5,5-trimethylcyclohexylisocyanat, 4,4'-Diisocyanatodicyclohexylmethan, 4,4'-Diisocyanato-3,3'-dimethyldicyclohexylmethan, 4,4'-Diisocyanatodicyclohexylpropan (2,2'), 1,4-Diisocyanatobenzol, 2,4- oder 2,6-Diisocyanatotoluol bzw. deren Isomerengemische und 4,4'-Diisocyanatodiphenylpropan (2,2').

Besonders bevorzugt eingesetzte Diisocyanate (I) sind Hexamethylendiisocyanat und die Isomerengemische von 2,4- und 2,6-Diisocyanatotoluol.

B) Die freie Hydroxygruppen tragenden Fettsäurepartialester werden durch Veresterung von Fettsäuren mit Polyolen erhalten, wobei die Polyole mindestens trifunktionell sind, bevorzugt jedoch mehr als 3 Hydroxygruppen, maximal 6 Hydroxygruppen enthalten sollen.

Geeignete Polyole sind z.B. Glycerin, Pentaerythrit, Trimethylolpropan, Hexantriol, Sorbit und Saccharose.

Als geeignete Fettsäuren im Sinne der Erfindung gelten Verbindungen der Formel

RCOOH (II)

in welcher

R für einen aliphatischen Rest mit 5 bis 21 Kohlenstoffatomen, insbesondere mit 15 bis 19 Kohlenstoffatomen steht.

Der aliphatische Rest R kann sowohl eine gesättigte als auch eine ungesättigte Alkylkette sein, wobei Doppelbindungen in der Kette vorteilhaft für die Pfropfausbeute sind.

Als besonders geeignete Fettsäuren (II) sind zu nennen: gesättigte Fettsäuren wie Stearinsäure, Arachinsäure, Behensäure, Kokosölfettsäure, Perlagonsäure und/oder ungesättigte Fettsäuren wie Ölsäure, Leinölfettsäure, Sojaölfettsäure, Tallölfettsäure, Linolsäue, Elaidinsäure und Ricinolfettsäure.

C) Die Fluoratome tragende Aufbaukomponente C besteht aus Perfluoralkylgruppen enthaltenden Bisalkoholen der allgemeinen Formel

$R_F(OH)_2$ (III)

in welcher

$R_F$ für ein Diradikal mit einem oder mehreren Perfluoralkylgruppen steht, wobei die Perfluoralkylkette 4 bis 20 Kohlenstoffatome enthält und auch durch Sauerstoff- und/oder Schwefelatome unterbrochen sein kann.

Vorzugsweise handelt es sich bei den Verbindungen der Formel (III) um mono- oder difunktionelle N-Sulfonyl- oder -Carbonylperfluoralkyl-aminoalkanolderivate.

Beispiele für solche besonders gut geeigneten Aufbaukomponenten (III) sind folgende Verbindungen.

$C_4F_9SO_2N(CH_2\text{-}CH_2\text{-}OH)_2$

$C_8F_{17}SO_2N(CH_2\text{-}CH_2\text{-}OH)_2$

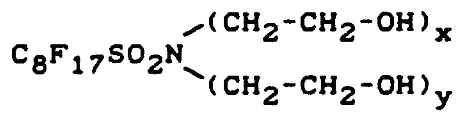

mit
x+v = 3-30

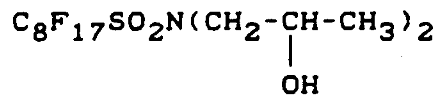

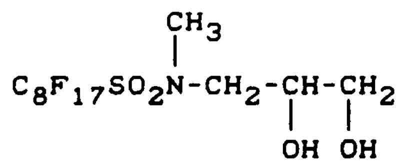

$C_4F_9$-O-$C_4F_8$-$SO_2$-N($CH_2$-$CH_2$-OH$)_2$
$C_7F_{15}$CON($CH_2$-$CH_2$-OH$)_2$

D) Die selbstemulgierend wirkenden, hydrophilen Gruppen werden in Form von Dihydroxyverbindungen mit in Salzform überführbaren Gruppen, wie Carbonsäure- und/oder Sulfonsäuregruppen oder tertiäre Aminogruppen, in die erfindungsgemäßen Polyurethane eingebaut.

Es handelt sich dabei beispieslsweise um Dimethylolpropionsäure, Weinsäure, Bis-(β-hydroxyethoxy)-benzoesäure, Oxalkylierungsprodukte von Aminosäuren wie Bis-(β-hydroxyethyl)aminoessigsäure und Bis-(β-hydroxethyl)aminobenzoesäure.

Als Diolsulfonsäuren sind beispielsweise 1,4-Dihydroxybutansulfonsäure oder deren Oxalkylierungsprodukte, Oxalkylierungsprodukte von Aminosulfonsäuren, z.B. Bis-(β-hydroxyethyl)taurin, Bis-(β-hydroxyethyl)-4-aminobenzolsulfonsäure zu nennen.

Zur Überführung der Carbon- und/oder Sulfonsäuregruppen in die entsprechenden Salze, sofern dies nicht durch innere Salzbildung erfolgt, dienen Basen wie die Hydroxide der Alkalimetalle, insbesondere aber Ammoniak und tertiäre Amine wie Triethylamin, Tripropylamin, Triethanolamin, sowie Dimethylbenzylamin u.a.

Zur Herstellung von kationischen Polyurethanen eignen sich einbaufähige, in Salze überführbare tertiäre Amine. Hervorzuheben sind hier N-Alkyl-, N-Aralkyl- und N-Aryl-dialkanolamine, beispielsweise N-Methyldiethanolamin, N-Ethyl-dipropanolamin, N-Cyclohexyl-diethanolamin, N-Benzyldiethanolamin und N-Phenyldiethanolamin.

Zur Salzbildung dienen Quarternierungsmittel und/oder Säuren. Beispielhaft seien hier Dimethylsulfat, Benzylchlorid, p-Toluolsulfonsäuremethylester, Phosphorsäure, Essigsäure, Milchsäure, Weinsäure, Benzoesäure und Zitronensäure genannt.

Die Menge an ionischer Aufbaukomponente D wird in der Regel so gewählt, daß die Polyurethandispersion einen Gehalt an ionischen Gruppen - an quarternären Ammoniumgruppen, - COO- oder -$SO_3$-Gruppen - von 2-200, bevorzugt 2-100 Milliäquivalente pro 100 g Polyurethan aufweisen.

Es lassen sich als Pfropfgrundlage auch geeignete Polyurethandispersionen herstellen, in denen die bevorzugten Diisocyanate (Aufbaukomponente A) durch entsprechende, in der Polyurethanchemie gut bekannte Polyisocyanate (Aufbaukomponente A') mit mindestens drei NCO-Gruppen, wie z.B. Triisocyanate, ersetzt werden. Damit zusammenhängend kann die bisfunktionelle Perfluoralkylgruppen enthaltende Komponente C durch eine monofunktionelle Perfluoralkylgruppen enthaltende, gegenüber NCO-Gruppen reaktive Komponete C' ausgetauscht werden.

Als geeignete Tri- bzw. Polyisocyanate sind beispielhaft folgende Verbindungen benannt, deren Struktur hier idealisiert ist:

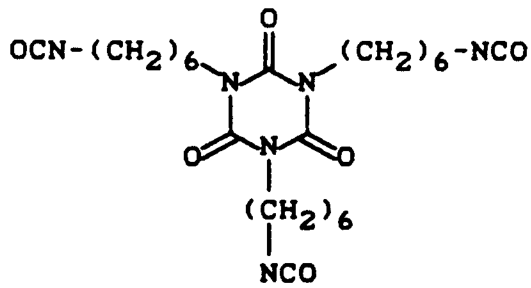

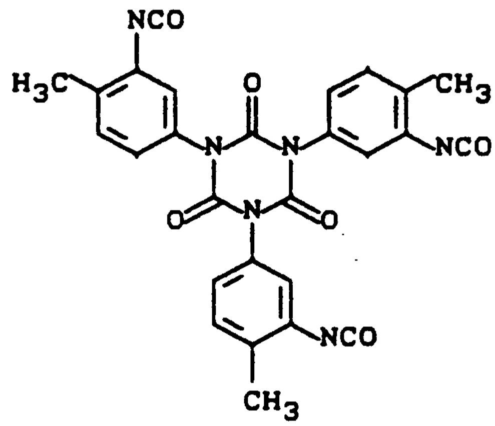

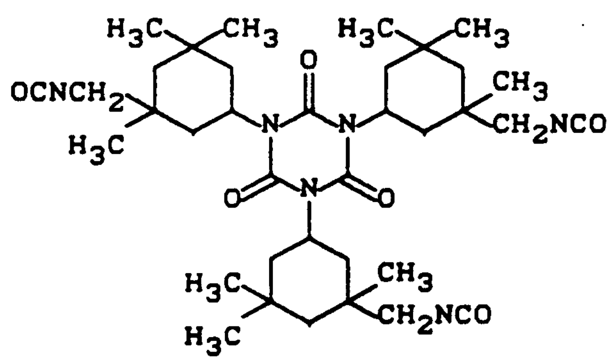

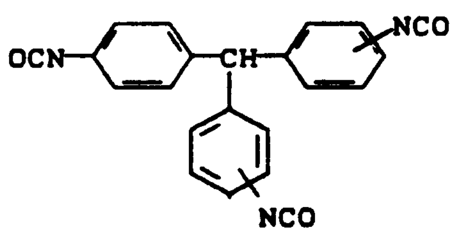

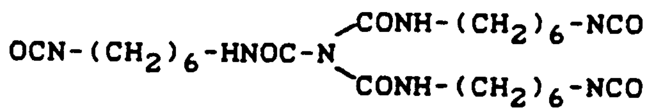

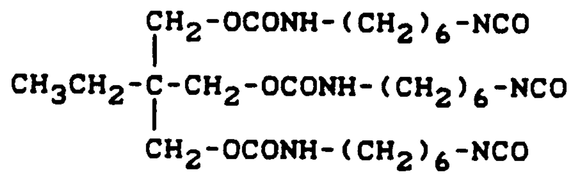

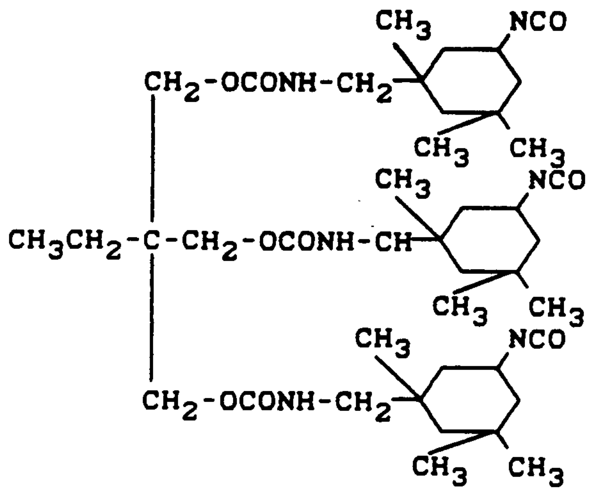

Bevorzugte monofunktionelle, perfluoralkylgruppen enthaltende Verbindungen (Aufbaukomponente C') in den Polyurethandispersionen sind die der Formeln:

$C_nF_{2n+1}$-$(CH_2)_m$-OH (IV)

und

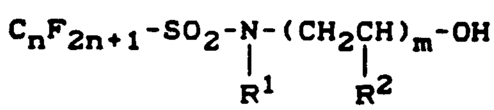 (V)

worin

n für die Zahlen 4 bis 16

m für die Zahlen 1 bis 4

$R^1$ für $C_1$- bis $C_4$-Alkyl und

$R^2$ für Wasserstoff oder Methyl steht.

Verfahren zur Herstellung selbstemulgierender, wäßriger Polyurethandispersionen sind dem Fachmann bekannt. Die hier beschriebenen, erfindungsgemäßen Polyurethandispersionen werden nach dem sogenannten "Acetonverfahren", wie beispielsweise aufgeführt in der DE-OS 1 495 745 und im US-P 3 479 310, hergestellt.

Die Herstellung der Polyurethane aus den Ausgangskomponenten A, B, C, D, bzw. A', B, C', D erfolgt mehrstufig. Die Mengenverhältnisse der Komponenten werden so gewählt, daß das Äquivalentverhältnis von Isocyanatgruppen der Edukte A bzw. A' zu gegenüber Isocyanatgruppen reaktionsfähigen Gruppen der Edukte B, C, D bzw. B, C', D bei 0,8:1 bis 1,2:1, vorzugsweise 0,85:1 bis 1,15:1 liegt.

Bezogen auf 1 Mol Isocyanatgruppen der Komponente A werden die Komponenten B, C und D in solchen Mengen eingesetzt, daß
0,2 bis 0,6 Mol Hydroxygruppen der Komponente B, vorzugsweise 0,3 bis 0,5 Mol Hydroxygruppen,
0,15 bis 0,35 Mol Hydroxygruppen der Komponente C, vorzugsweise 0,2 bis 0,3 Mol Hydroxygruppen, und
0,15 bis 0,35 Mol Hydroxygruppen der Komponente D, vorzugsweise 0,2 bis 0,3 Mol Hydroxygruppen,
zur Isocyanatreaktion zur Verfügung stehen.

Auf 1 Mol Isocyanatgruppen der Komponente A' werden die Komponenten B, C' und D in solchen Mengen eingesetzt, daß
0,1 bis 0,3 Mol Hydroxygruppen der Komponente B, vorzugsweise 0,15 bis 0,25 Mol Hydroxygruppen,
0,25 bis 0,45 Mol Hydroxygruppen der Komponente C', vorzugsweise 0,3 bis 0,4 Mol Hydroxygruppen, und
0,25 bis 0,55 Mol Hydroxygruppen der Komponente D, vorzugsweise 0,3 bis 0,5 Mol Hydroxygruppen,
zur Isocyanatreaktion gebracht werden.

Der Fluorgehalt in den Polyurethandispersionen liegt bei 5 bis 30 %, vorzugsweise bei 8 bis 25 % Fluor bezogen auf den Feststoff.

Bei den oben beschriebenen, als Pfropfgrundlage verwendeten Polyurethanen handelt es sich um in Wasser dispergierbare Verbindungen.

Die Feststoffkonzentration der PU-Dispersion wird durch die Wasserzugabe auf ca. 10 bis 40 %, insbesondere 10-30 % eingestellt.

Als Pfropfgrundlage werden die oben genannten Polyurethandispersionen in Mengen von 2 bis 50, vorzugsweise 5 bis 35 Gew.-%, bezogen auf die Gesamtmenge der zur Herstellung der Pfropfauflage verwendeten Monomere, eingesetzt.

Die Pfropfauflage ist aufgebaut aus ethylenisch ungesättigten Perfluoralkylmonomeren und perfluoralkylgruppenfreien ethylenisch ungesättigten Monomeren.

Geeignete Perfluoralkylmonomere sind solche der Formel

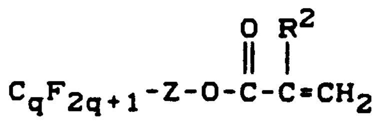 (VI)

in welcher
q für die Zahlen 4 bis 12,
$R^2$ für Wasserstoff oder Methyl steht und
Z für die Gruppierung
$-(CH_2)_m-$, $-O-(CH_2)_m-$oder

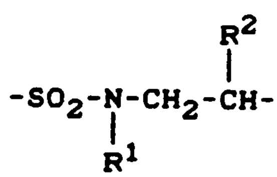

steht, wobei
m für die Zahlen 1 bis 4 steht und
$R^1$ für $C_1$-$C_4$-Alkyl wie beispielsweise Methyl, Ethyl, n-Propyl, i-Propyl, n-Butyl, i-Butyl oder t-Butyl steht.

Bevorzugt sind Perfluoralkylmonomere der Formel (VI)
in welcher
$R^2$ und Z die oben angegebene Bedeutung haben und
$R^1$ für Methyl oder Ethyl steht,
m für die Zahl 2 steht und
q für die Zahlen 6 bis 8 steht.

Geeignete perfluoralkylgruppenfreie Monomere sind Verbindungen der Formeln

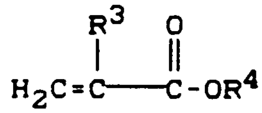

(VII)

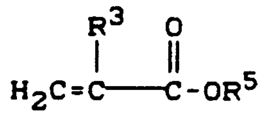

(VIIIa)

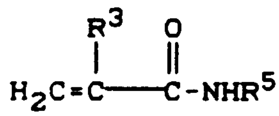

(VIIIb) und

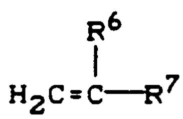

(VIIIc)

in welchen

$R^3$ für Wasserstoff, Methyl oder Fluor steht,

$R^4$ für $C_8$-$C_{22}$-Alkyl steht,

$R^5$ für $C_1$-$C_7$-Alkyl,

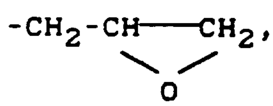

$-CH_2-OH$, $-CH_2-OCH_3$ oder

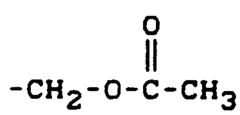

steht,

$R^6$ für Wasserstoff, Methyl, Fluor oder Chlor steht und

$R^7$ für Fluor, Chlor, Cyano, Phenyl oder

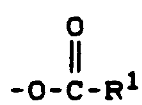

steht.

Bevorzugt sind solche Monomere der Formel (VII) in welcher

$R^3$ für Wasserstoff oder Methyl steht und

$R^4$ für $C_{12}$-$C_{22}$-Alkyl steht.

Beispielhaft seien genannt: Acryl- oder Methacrylsäureester von Behenylalkohol, Stearylalkohol, Oleylalkohol, Nonyl- oder Octylalkohol oder Isomerengemische solcher Alkohole.

Bevorzugte Monomere (VIII) sind Vinylester wie Vinylacetat oder Vinylpropionat sowie Acryl- und Methacrylsäureester von $C_1$-$C_4$-Alkanolen.

Bevorzugt enthalten die Pfropfauflagen die einzelnen Arten von Comonomeren in den nachstehend angeführten Mengenverhältnissen:
Perfluoralkylmonomere der Formeln (VI) 15 bis 70 Gew.-%, vorzugsweise 25 bis 60 Gew.-%,
Comonomere der Formel (VII) 5 bis 35 Gew.-%, vorzugsweise 10 bis 25 Gew.-%,
Comonomere der Formel (VIII) 15 bis 65 Gew.-%, vorzugsweise 20 bis 55 Gew.-%.

Im allgemeinen werden wasserunlösliche Comonomere bevorzugt, zur Gewährleistung einer gewissen Haftung auf den verschiedenen Substraten bei der Oleophob-/Hydrophobausrüstung können auch wasserlösliche Comonomere in Anteilen bis zu 10 Gew.-%, vorzugsweise 2 Gew.-%, verwendet werden.

Zur Herstellung der erfindungsgemäßen Copolymerisatdispersionen wird nach der Verfahrensweise der Emulsionspolymerisation in Wasser gearbeitet. Die Perfluoralkylmonomeren werden, gegebenenfalls unter Verwendung von Hilfslösungsmitteln, zusammen mit den übrigen Comonomeren homogen gelöst. Als Hilfslösungsmittel sind Lösungsmittel geeignet, die den Ablauf der Emulsionspolymerisation wenig beeinflussen, z.B. Alkohole wie Methanol, Ethanol, n-Propanol, Isopropanol und tert.-Butanol, Ketone wie Aceton, Methylethylketon und Isobutylmethylketon, Ether wie Tetrahydrofuran und Amide wie Dimethylacetamid (US 3 403 122). Häufig ist es vorteilhaft, als Hilfslösungsmittel mit Wasser nicht oder nur begrenzt mischbare Lösungsmittel zu verwenden, wie Ester niederer Alkohole mit niederen Carbonsäuren, unter der Voraussetzung, daß unter den Bedingungen der Emulsionspolymerisation keine Esterverseifung erfolgen kann. Besonders vorteilhaft ist die Verwendung von Essigsäureethylester, Essigsäuremethylester, Propionsäuremethylester oder Methylethylketon. Das Hilfslösungsmittel wird nach Abschluß der Polymerisation entfernt.

Die Herstellung der Emulsion erfolgt in Rühraggregaten, Ultraschallapparaturen oder Homogenisatoren.

Die Polymerisation wird durch Radikalbildner ausgelöst. Als Radikalbildner sind z.B. aliphatische Azoverbindungen wie Azodiisobutyronitril und organische oder anorganische Peroxide geeignet. Als organische Peroxide seien genannt: Diacylperoxide wie Dibenzoylperoxid, Hydroperoxide wie tert.-Butylhydroperoxid und Percarbonate wie Dicyclohexylpercarbonat. Als anorganische Peroxide eignen sich besonders die Alkalisalze der Peroxidisulfonsäure.

Im allgemeinen betragen die Polymerisationstemperaturen 50 bis 100° C, vorzugsweise 60-90° C.

Es ist auch möglich, durch Verwendung von Redoxsystemen die Copolymerisation bei Temperaturen von 40° C und darunter durchzuführen. Geeignete Startersysteme sind z.B. Mischungen aus Peroxidisulfaten und reduzierenden Schwefelverbindungen wie Bisulfite oder Thiosulfate oder Kombinationen von Diacylperoxide mit tert.-Aminen. Zur Einstellung der Molekulargewichte bzw. der Molekulargewichtsverteilungen können die bekannten Kettenüberträger auf Basis von Mercaptoverbindungen oder aliphatischen Aldehyden verwendet werden.

Bei der Polymerisation kann gleichzeitig eine Pfropfcopolymerisation stattfinden, bei der Anteile des Copolymeren auf die verwendeten Polyurethane aufgepropft werden.

Dadurch wird die Stabilität der erfindungsgemäßen Copolymerisatdispersion zusätzlich erhöht. Solche Pfropfreaktionen werden beispielsweise von H. Gerrens in "Fortschritte der Hochpolymerforschung", Bd. I (1959), S. 300 beschrieben.

Die erfindungsgemäßen wäßrigen Dispersionen können weitere Polymere, wie sie beispielsweise in der DOS 3 407 361 und der DOS 3 407 362 beschrieben sind, insbesondere hydrophobe Vinylpolymere (IX) oder Polykondensate (X), wie sie beispielsweise in der DE-OS 956 990 beschrieben sind, - gegebenenfalls als zusätzliche Pfropfgrundlage - enthalten, vorzugsweise in Mengen von 8 Gew.-% bis 30 Gew.-% bezogen auf das Copolymerisat aus (VI), (VII) und (VIII).

Geeignete Vinylpolymerisate (IX) sind beispielsweise Copolymerisate aus (Meth)acrylaten wie Isobutylmethacrylat oder Butylacrylat, die mindestens ein Comonomer mit hydrophobem Alkylrest enthalten, wie beispielsweise Stearylmethacrylat. Geeignete Polykondensate (X) sind beispielsweise Harnstoffharze sowie Melaminharze, wie sie z.B. durch Umsetzung von Hexamethylol-melamin-pentamethylether mit Fettsäuren und gegebenenfalls mit Methyldialkanolamin erhalten werden, wie beispielsweise im EP 324 354 beschrieben.

Eine besondere Ausführungsform ist dabei die Kombination eines solchen Melaminkondensats mit Paraffinfraktionen bzw. Paraffinwachsen.

Nach dem Verfahren der Emulsionspolymerisation werden zur Herstellung der Monomeremulsionen übliche kationenaktive, anionenaktive oder nichtionogene Emulgatoren sowie Kombinationen aus ionischen und nichtionischen Emulgatoren verwendet.

Beispiele für die eingesetzten kationischen Emulgatoren sind quartäre Ammonium- oder Pyridiniumsalze, z.B. Stearyldimethylbenzylammoniumchlorid oder N,N,N-Trimethyl-N-perfluoroctansulfonamidopropylammoniumchlorid.

Beispiele für anionische Emulgatoren sind Alkylsulfonate, Alkylarylsulfonate, Fettalkoholsulfate oder Sulfobernsteinsäureester, ferner perfluoralkylgruppenhaltige Emulgatoren wie Ammonium- oder Tetraethylammoniumsalze der Perfluoroctansulfonsäure oder das Kaliumsalz des N-Ethyl-N-Perfluoroctansulfonylglycins. Durch nichtionische Emulgatoren wird besonders die Lagerstabilität der Copolymerisatdispersionen erhöht.

Beispiele für nichtionische Emulgatoren sind Polyglykolether, z.B. Ethylenoxid/Propylenoxid-Copolymer, auch solche mit Blockstruktur, sowie Alkoxylierungsprodukte, insbesondere Ethoxylierungsprodukte von Fettalkoholen, Alkylphenolen, Fettsäuren, Fettsäureamiden, Sorbitmonooleat.

Durch die selbstemulgierende Wirkung der PU-Dispersionen kann die üblicherweise verwendete Emulgatormenge deutlich reduziert werden. Dies wirkt sich günstig auf die hydrophobierenden und oleophobierenden Effekte der Polymerlatices aus (JA 63 214 331).

In einer bevorzugten Ausführungsform wird die Pfropfcopolymerisation von (VI), (VII), (VIII) und den als Pfropfgrundlage verwendeten Polyurethandispersionen in Gegenwart von (IX) und/oder (X) als zusätzliche Pfropfgrundlagen durchgeführt. Vorzugsweise werden (IX) und (X) dabei in Form wäßriger Dispersionen eingesetzt.

Die erfindungsgemäßen Dispersionen eignen sich hervorragend zur Behandlung von natürlichen und synthetischen Materialien wie Leder, Papier, Fasern, Filamente, Garne, Vliese, Gewebe, Gewirke und Gestricke, insbesondere Teppiche, aus insbesondere Cellulose und ihren Derivaten, aber auch aus Polyester-, Polyamid- und Polyacrylnitrilmaterialien, Wolle oder Seide, denen die erfindungsgemäßen Dispersionen oleophobe und hydrophobe Eigenschaften verleihen.

Die erfindungsgemäßen Dispersionen können auch in Kombination mit weiteren fluorhaltigen bzw. fluorfreien Dispersionen eingesetzt werden.

Für die Ausrüstung von Teppichen werden die erfindungsgemäßen Pfropfcopolymerisate in Form wäßriger Dispersionen vorzugsweise in Kombination mit wäßrigen kolloidalen Suspensionen von Organosiloxanen, wie sie beispielsweise in DE-A 3 307 420 beschrieben sind, und gegebenenfalls in zusätzlicher Kombination mit anderen fluorhaltigen Dispersionen eingesetzt.

Überraschend zeigte sich nun, daß die erfindungsgemäßen Dispersionen deutlich verbesserte oleophobierende und hydrophobierende Effekte auf den damit ausgerüsteten Substraten wie Textilien, Leder und Papier aufweisen.

Mit den erfindungsgemäßen Disperionen können natürliche und synthetische Materialien wie Leder, Papier, Fasern, Filamente, Garne, Vliese, Gewebe, Gewirke und Gestricke, insbesondere Teppiche, aus insbesondere Cellulose und ihren Derivaten aber auch aus Polyester-, Polyamid- und Polyacrylnitrilmaterialien, Wolle oder Seide erfolgreich oleophob und hydrophob ausgerüstet werden.

Bei Verwendung der erfindungsgemäßen Dispersionen, die unter Verwendung der oben genannten Polyurethandispersionen als Pfropfgrundlage hergestellt wurden, werden verbesserte oleophobierende und hydrophobierende Eigenschaften dadurch erreicht, daß geringere Emulgatormengen für die Stabilisierung der Polymerlatices notwendig sind.

Übliche Oleophob-/Hydrophobausrüstungsmittel enthalten im allgemeinen Emulgatoren in nachteilig hohen Konzentrationen, was sich negativ auf die Einstellung des gewünschten Hydrophobniveaus auswirkt. Außerdem verursachen die Emulgatoren ein Schmutzrückhaltevermögen auf den ausgerüsteten Waren. Bei Verwendung der erfindungsgemäßen Pfropfcopolymerisatdispersionen können die geschilderten Nachteile vermieden werden.

Die Ausrüstung erfolgt nach bekannten Verfahren, wie z.B. Auszieh- oder Foulard-Verfahren beispielsweise zwischen Raumtemperatur und 40° C, aber auch durch Pflatschen, Besprühen oder Schaumapplikation mit einer nachgeschalteten Temperaturbehandlung bei 80 bis 180° C, vorzugsweise 120 bis 150° C.

Herstellung der Pfropfgrundlagen:

I. Polyurethandispersionen

Beispiel A:

143,4 g Glycerinmonostearat handelsüblicher Qualität der OH-Zahl 229 wurden zusammen mit 200 g wasserfreiem Aceton und 3 g 1,4-Diazabicyclo[2.2.2]octan zum Rückfluß erhitzt. Hierzu gab man innerhalb von 1,5 Stunden die Lösung 1 bestehend aus 134,4 g Hexamethylendiisocyanat in 100 g wasserfreiem

Aceton. Das Reaktionsgemisch wurde am Rückfluß so lange umgesetzt, bis der NCO-Gehalt auf ca. 7,3 % gefallen war. Es wurde die Lösung 2 bestehend aus 117,4 g N,N-Bis(2-hydroxyethyl)perfluoroctylsulfonamid in 250 g wasserfreiem Aceton innerhalb von 1,5 Stunden zudosiert. Anschließend wurde ca. 1 Stunde zum Rückfluß erhitzt. Als ein NCO-Gehalt von 2,7 % erreicht war, gab man Lösung 3 bestehend aus 23,8 g N-Methyldiethanolamin in 50 g Aceton, hinzu und rührte noch 5,5 Stunden nach,

Zur Salzbildung fügte man 100 g Eisessig hinzu. Es wurde 1 Stunde nachgerührt und 1680 g entionisiertes Wasser von 60° C innerhalb von 1,5 Stunden zugegeben. Nach Entfernung des Acetons durch Vakuumdestillation erhielt man eine ca. 20 %ige Dispersion.

$N^+$: 47,7 mÄquivalente pro 100 g
Feststoffgehalt: 20 %
Fluorgehalt: 15,4 % bezogen auf Feststoff

Beispiel B:

110,8 g trimeres Hexamethylendiisocyanat handelsüblicher Qualität (NCO-Gehalt: 19,4 %), 150 g wasserfreies Aceton und 2,5 g 1,4-Diazabicyclo[2.2.2]octan wurden zum Rückfluß erhitzt. Zu dieser Lösung wurden Lösung 1 bestehend aus 100,2 g N-Methyl-N(2-hydroxyethyl)perfluoroctansulfonamid, gelöst in 150 g wasserfreiem Aceton, innerhalb von 1 Stunde zudosiert. Nach ca. 2,5 Stunden Reaktionszeit war eine NCO-Gehalt von 2,8 % erreicht. Es wurde Lösung 2, bestehend aus 19,2 g Glycerinmonooleat (OH-Zahl 261) und 100 g wasserfreiem Aceton, innerhalb 1 Stunde zugetropft. Nach 2,5 Stunden betrug der NCO-Gehalt 1,7 %. Zugabe von Lösung 3, bestehend aus 11,94 g N-Methyldiethanolamin in 100 g wasserfreiem Aceton, und Nachrühren am Rückfluß (5,5 Stunden) führte zur vollständigen Umsetzung der Isocyanatgruppen.

Nach Zudosierung von 40 g Eisessig zwecks Salzbildung wurde erneut 1 Stunde am Rückfluß erhitzt. Dann wurden 968 g entionisiertes Wasser von 60° C innerhalb von 1,5 Stunden eingebracht und anschließend das Aceton im Vakuum abdestilliert,

$N^+$: 41,4 mÄquivalente pro 100 g
Feststoffgehalt: 20 %
Fluorgehalt: 24 % bezogen auf Feststoff

Beispiel C:

Als Ausgangsverbindungen wurden verwendet:
126,0 g Glycerinmonooleat (OH-Zahl: 261)
200,0 g wasserfreies Aceton
3,0 g 1,4-Diazabicyclo[2.2.2]octan (DABCO)

| | |
|---|---|
| Lösung 1: | 134,4 g Hexamethylendiisocyanat in |
| | 100,0 g Aceton |
| Lösung 2: | 117,4 g N,N-Bis(2-hydroxyethyl)perfluoroctylsulfonamid in |
| | 250,0 g Aceton |
| Lösung 3: | 23,8 g N-Methyldiethanolamin in |
| | 50,0 g Aceton |
| | 50,0 g Eisessig |
| | 1606,0 g entionisiertes Wasser |

Die Reaktionsdurchführung erfolgte analog zu Beispiel A.
$N^+$: 49,8 mÄquivalente pro 100 g
Feststoffgehalt: 20 %
Fluorgehalt: 16,1 % bezogen auf Feststoff

Beispiel D:

Als Ausgangsverbindungen wurden verwendet:
126,0 g Glycerinmonooleat (OH-Zahl: 261)
200,0 g wasserfreies Aceton
3,0 g DABCO

| | |
|---|---|
| Lösung 1: | 126,0 g Hexamethylendiisocyanat in |
| | 100,0 g Aceton (NCO-Gehalt 6,9 %) |
| Lösung 2: | 78,8 g N,N-Bis(2-hydroxyethyl)perfluorbutylsulfonamid in |

| | |
|---|---|
| | 250,0 g Aceton (NCO-Gehalt 2,4 %) |
| Lösung 3: | 23,8 g N-Methyldiethanolamin in |
| | 50,0 g Aceton |
| | 100 g Eisessig |
| | 1408,0 g entionisiertes Wasser |

Die Reaktionsdurchführung erfolgte analog zu Beispiel A.
$N^+$: 56,4 mÄquivalente pro 100 g
Feststoffgehalt: 22 %
Fluorgehalt: 9,8 % bezogen auf Feststoff

II. Hydrophobes Polykondensat

Beispiel E:

Als Pfropfgrundlage verwendbare Melaminkondensationsprodukte, wie sie z.B. in der DOS 3 800 845 in der US-P 2 398 569 beschrieben sind, können erhalten werden, indem man z.B. Methylolprodukte von Aminotriazinen oder deren Veretherungs- und Veresterungsprodukte beispielsweise mit aliphatischen Carbonsäuren und mit Aminen im Rahmen einer Polykondensation umsetzt. Man kann dazu zunächst die Carbonsäure mit dem Melaminderivat umsetzen und anschließend die Aminokomponente zur Reaktion bringen (siehe DPS 956 990).

Es wurde beispielsweise als Pfropfgrundlage hergestellt:
Eine Mischung aus 50 Gew.-% eines Kondensationsproduktes, hergestellt aus 1 Mol Hexamethylolmelaminpentamethylether, 1,5 Mol Behensäure und 0,9 Mol n-Methyldiethanolamin bei 130° C während 3 Stunden und 50 Gew.-% Paraffin vom Schmelzpunkt 52° C.

Herstellung der erfindungsgemäßen Copolymerisationsdispersionen

Beispiel 1

Man bereitete folgende Lösungen bei 50° C:

| | | | |
|---|---|---|---|
| Lösung 1: | 119,25 | Gew.-Teile | der nach Beispiel A erhaltenen Dispersion |
| | 6,1 | " | eines ethoxylierten Nonylphenols mit 10 Ethylenoxideinheiten |
| | 6,25 | " | Benzyldodecyldimethylammoniumchlorid |
| | 540 | " | entionisiertes Wasser |
| Lösung 2: | 450 | " | Essigsäureethylester |
| | 43,4 | " | N-Methyl-N-perfluoroctansulfonamidoethylmethacrylat |
| | 12,7 | " | Stearylmethacrylat |
| | 18,45 | " | Vinylacetat |
| | 14,6 | " | Pfropfgrundlage wie nach Beispiel E erhalten. |

Man bereitete folgende Lösung bei 30° C:

| | | | |
|---|---|---|---|
| Lösung 3: | 0,268 | " | t-Butylperpivalat |
| | 0,918 | " | Dilaurylperoxid |
| | 6,0 | " | Essigsäureethylester |

Aus den Lösungen 1 und 2 wurde eine Mischung hergestellt und diese bei 50° C in einer Emulgiermaschine emulgiert. Die erhaltene Emulsion gab man in einen Reaktor, der mit Rührer, Rückflußkühler und Innenthermometer ausgestattet war und ließ auf 30° C abkühlen. Man setzte Lösung 3 bei 30° C zu und ließ eine Stunde bei 30-40° C rühren. Man steigerte danach die Temperatur innerhalb einer halben Stunde auf 60° C und rührte eineinhalb Stunden bei 60-70° C. Anschließend hielt man die Temperatur drei Stunden bei 70-80°C und destillierte dabei den Essigsäureethylester über eine zusätzlich angebrachte Destillationsbrücke ab. Danach rührte man noch drei Stunden bei 83-85° C.
Feststoffgehalt: 14,9 %
Fluorgehalt im Festtoff: 21,4 %
Mittlere Teilchengröße: 390 nm
(nach Lichtstreuung)

Beispiel 2

Man bereitete folgende Lösung bei 50° C:

| | | | |
|---|---|---|---|
| Lösung 1: | 116,8 | Gew.-Teile | der nach Beispiel B erhaltenen Dispersion |
| | 6,1 | " | eines ethoxylierten Nonylphenols mit 10 Ethylenoxideinheiten |
| | 6,25 | " | Benzyldodecyldimethylammoniumchlorid |
| | 540,0 | " | entionisiertes Wasser |

Herstellung der Lösungen 2 und 3 sowie Durchführung der Polymerisation erfolgt analog zu Beispiel 1.
Feststoffgehalt: 16,2 %
Fluorgehalt im Feststoff: 23,3 %
Mittlere Teilchengröße: 340 nm
(nach Lichtstreuung)

Vergleichsversuch 1:

Es wurde eine Copolymerisatdispersion nach den Angaben in Beispiel 1 hergestellt, jedoch ohne die nach Beispiel A erhaltene Dispersion zu verwenden.
Feststoffgehalt: 13,4 %
Fluorgehalt im Feststoff: 23,2 %
Die Dispersion blieb nur ca. zwei Wochen stabil; danach setzte Trennung in zwei Phasen ein.

Beispiel 3

Man stelle folgende Lösung bei 50° C her:

| | | | |
|---|---|---|---|
| Lösung 1: | 138,5 | Gew.-Teile | der nach Beispiel B erhaltenen Dispersion |
| | 10,25 | " | eines ethoxylierten Nonylphenols mit 10 Ethylenoxideinheiten |
| | 4,25 | " | Benzyldodecyldimethylammoniumchlorid |
| | 540,0 | " | entionisiertes Wasser |

Die Lösungen 2 und 3 wurden analog Beispiel 1 hergestellt.

Aus Lösung 1 und 2 wurde ein Mischung hergestellt und diese bei 50° C in einer Emulgiermaschine emulgiert. Die erhaltene Emulsion gab man in einen Reaktor, der mit Rührer, Rückflußkühler und Innenthermometer ausgestattet war und ließ auf 30° C abkühlen. Man setzte Lösung 3 bei 30° C zu und ließ eine halbe Stunde bei 30 bis 40° C rühren. Anschließend ließ man eineinhalb Stunden bei 60 bis 70° C rühren. Danach ließ man drei Stunden bei 70 bis 80° C reagieren und destillierte dabei den Essigsäureethylester über eine zusätzlich angebrachte Destillationsbrücke ab. Anschließend rührte man noch drei Stunden bei 83 bis 85° C und eine Stunde bei 85 bis 90° C nach.

Feststoffgehalt: 16,8 %
Fluorgehalt im Festtoff: 21,4 %
Mittlere Teilchengröße: 196 nm
(nach Lichtstreuung)

Vergleichsversuch 2:

Es wurde eine Copolymerisatdispersion nach den Angaben in Beispiel 3 hergestellt, jedoch ohne die nach Beispiel B erhaltene Dispersion zu verwenden.

Feststoffgehalt: 14,3 %
Fluorgehalt im Feststoff: 22,8 %
Teilchengröße: 471 nm
(nach Lichtstreuung)

Beispiel 4

Man stellte folgende Lösung bei 50° C her:

| | | | |
|---|---|---|---|
| Lösung 1: | 159,00 | Gew.-Teile | der nach Beispiel C erhaltenen Dispersion |
| | 6,10 | " | eines ethoxylierten Nonylphenols mit 10 Ethylenoxideinheiten |
| | 6,25 | " | Benzyldodecyldimethylammoniumchlorid |
| | 540,00 | " | entionisiertes Wasser |

Herstellung der Lösungen 2 und 3 sowie die Reaktionsdurchführung erfolgte analog zu Beispiel 1.
Feststoffgehalt: 15,1 %
Fluorgehalt im Feststoff: 23,3 %
Mittlere Teilchengröße: 471 nm
(nach Lichtstreuung)

Beispiel 5

Man stellte folgende Lösung bei 50° C her:

| | | | |
|---|---|---|---|
| Lösung 1: | 143,10 | Gew.-Teile | der nach Beispiel D erhaltenen Dispersion |
| | 6,10 | " | eines ethoxylierten Nonylphenols mit 10 Ethylenoxideinheiten |
| | 6,25 | " | Benzyldodecyldimethylammoniumchlorid |
| | 540,00 | " | entionisiertes Wasser |

Herstellung der Lösungen 2 und 3 sowie die Reaktionsdurchführung erfolgte analog zu Beispiel 2.
Feststoffgehalt: 15,4 %
Fluorgehalt im Feststoff: 23,3 %
Mittlere Teilchengröße: 514 nm
(nach Lichtstreuung)

Beispiel für Verwendung der erfindungsgemäßen Copolymerisatdispersionen

Es wurde eine wäßrige Dispersion nach Beispiel 1 hergestellt. 40 Gew.-Teile dieser Dispersion wurden mit 60 Gew.-Teilen einer wäßrigen kolloidalen Suspension von Organosiloxanen, wie sie in DE 3 307 420 beschrieben sind, abgemischt.

Eine 2,5 %ige wäßrige Verdünnung dieser Mischung wurde auf einen Polyamid-Teppich (Tuftingware mit 30 % Restfeuchte, Polgewicht: 500 g/$m^2$) so aufgebracht (Sprühauftrag), daß eine Auflage von 1 Gew.-% der o.g. Mischung (bezogen auf das Polgewicht) auf dem Teppich verblieb.

Anschließend wurde bei 125-150° C während 5 bis 15 Minuten getrocknet und kondensiert, 24 Stunden bei 23° C und 65 % relativer Luftfeuchte klimatisiert und dann die anwendungstechnischen Prüfungen durchgeführt.

Analog wurden nach Beispiel 2 bis 5 hergestellte Dispersionen zur Ausrüstung von Polyamid-Teppichen eingesetzt.

Tabelle 1 zeigt die anwendungstechnischen Ergebnisse, die erhalten werden, wenn man die nach Beispiel 1 bis 5 hergestellten Copolymerisatdispersionen bei der Oleophob-/Hydrophobausrüstung von Teppichen auf Basis von synthetischen Polyamidfasern einsetzt sowie die Ergebnisse der nicht erfindungsgemäßen Vergleichsversuche (VV1, VV2).

Tabelle 1

| | Oleophobie[1)] | Hydrophobie[2)] |
|---|---|---|
| Beispiel 1 | 3 | 20/80 |
| Beispiel 2 | 5 | 20/80 |
| VV1 | 1 | 70/30 |
| Beispiel 3 | 4 | 20/80 |
| VV2 | 0 | 90/10-80/20 |
| Beispiel 4 | 4 | 70/30 |
| Beispiel 5 | 2 | 70/30 |

1) Nach AATCC-Test-Methode 118 (5 besser als 4)

2) Beständigkeit gegen wäßrig-isopropanolische Lösungen (Wasser/Isopropanol = 60/40 besser als 70/30)

Gegenüber den ohne Verwendung einer Polyurethandispersion hergestellten Copolymerisatdispersionen (Vergleichsbeispiele, VV1 und VV2) ergab sich eine deutliche Verbesserung sowohl der oleophobierenden als auch der hydrophobierenden Wirkung beim Einsatz der erfindungsgemäßen Copolymerisatdispersionen. Das Anschmutzverhalten der mit diesen Copolymerisatdispersionen ausgerüsteten Teppiche war ebenfalls verbessert und entsprach erhöhten Anforderungen.

**Patentansprüche**

**1.** Wäßrige Dispersionen von Copolymerisaten und/oder Pfropfcopolymerisaten aus ethylenisch ungesättigten Perfluoralkylmonomeren und perfluoralkylgruppenfreien ethylenisch ungesättigten Monomeren, hergestellt durch Polymerisation in Gegenwart wäßriger, emulgatorfreier Polyurethandispersionen als Pfropfgrundlage, wobei die Polyurethane die folgenden Aufbaukomponenten eingebaut enthalten:
A) organische Polyisocyanate,
B) Partialester aus Fettsäuren und Polyolen,
C) Perfluoralkylgruppen enthaltende Verbindungen mit aktiven Wasserstoffatomen und
D) aktive Wasserstoffatome enthaltende Verbindungen mit Salzgruppen oder mit in Salzgruppen überführbare Gruppen.

**2.** Wäßrige Dispersionen gemäß Anspruch 1, dadurch gekennzeichnet, daß die als Pfropfgrundlage verwendeten Polyurethandispersionen einen Fluorgehalt von 5 bis 30 %, bezogen auf den Feststoff, haben.

**3.** Wäßrige Dispersionen gemäß Anspruch 1, dadurch gekennzeichnet, daß die Perfluoralkylmonomere der Formel

$$C_qF_{2q+1}-Z-O-\overset{\overset{O}{\|}}{C}-\overset{\overset{R^2}{|}}{C}=CH_2 \qquad (VI)$$

entsprechen,
in welcher

q für die Zahlen 4 bis 12 steht,
$R^2$ für Wasserstoff oder Methyl steht und
Z für die Gruppierung
$-(CH_2)_m-$, $-O-(CH_2)_m-$ oder

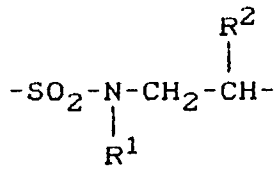

steht, wobei
m für die Zahlen 1 bis 4 steht und
$R^1$ für $C_1$-$C_4$-Alkyl steht.

**4.** Wäßrige Dispersionen gemäß Anspruch 1, dadurch gekennzeichnet, daß die perfluoralkylgruppenfreien Monomere den Formeln

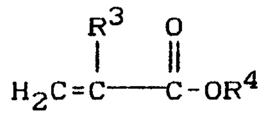

(VII)

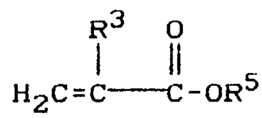

(VIIIa)

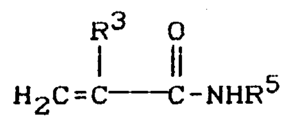

(VIIIb) und

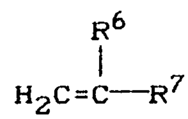

(VIIIc)

entsprechen,
in welchen

$R^3$ für Wasserstoff, Methyl oder Fluor steht,
$R^4$ für $C_8$-$C_{22}$-Alkyl steht,
$R^5$ für $C_1$-$C_7$-Alkyl,

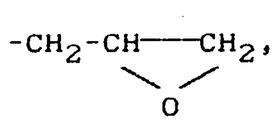

$-CH_2-OH$, $-CH_2-OCH_3$ oder

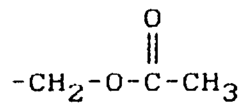

steht,

$R^6$ für Wasserstoff, Methyl, Fluor oder Chlor steht und

$R^7$ für Fluor, Chlor, Cyano, Phenyl oder

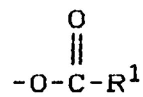

steht.

5. Wäßrige Dispersionen gemäß den Ansprüchen 1 und 4, dadurch gekennzeichnet, daß als perfluoralkylgruppenfreie Monomere Vinylester, Acryl- oder Methacrylsäureester von $C_1$-$C_4$-Alkanolen oder Acryl- oder Methacrylsäureester von $C_{12}$-$C_{22}$-Alkanolen verwendet werden.

6. Mischungen aus wäßrigen Dispersionen gemäß Ansprüchen 1-5 und hydrophoben Vinylpolymeren (IX) oder Polykondensaten (X).

7. Mischungen gemäß Anspruch 6, dadurch gekennzeichnet, daß als hydrophobe Vinylpolymere (IX) Copolymerisate aus (Meth)acrylaten, die mindestens ein Comonomer mit hydrophoben Alkylrest enthalten und als Polykondensate (X) Harnstoffharze sowie Melaminharze eingesetzt werden.

8. Wäßrige Dispersionen gemäß den Ansprüchen 1-5, dadurch gekennzeichnet, daß als zusätzliche Pfropfgrundlage hydrophobe Vinylpolymere (IX) oder Polykondensate (X) eingesetzt werden.

9. Wäßrige Dispresionen gemäß Anspruch 8, dadurch gekennzeichnet, daß die hydrophoben Vinylpolymere (IX) und die Polykondensate (X) den unter Anspruch 8 beschrieben entsprechen.

10. Verwendung wäßriger Dispersionen gemäß den Ansprüchen 1-9 zur Ausrüstung von natürlichen oder synthetischen, cellulose-, polyester-, polyamid- oder polyacrylnitrilhaltigen Materialien.

**Claims**

1. Aqueous dispersions of copolymers and/or graft copolymers composed of ethylenically unsaturated perfluoroalkyl monomers and perfluoroalkyl-free ethylenically unsaturated monomers, prepared by polymerisation in the presence of aqueous, emulsifier-free polyurethane dispersions as the graft base where the polyurethanes contain the following structural components incorporated therein:
   A) organic polyisocyanates,
   B) partial esters of fatty acids with polyols,
   C) compounds containing perfluoroalkyl groups and active hydrogen atoms and
   D) compounds containing active hydrogen atoms and salt groups or groups which can be converted into salt groups.

2. Aqueous dispersions according to Claim 1 characterised in that the polyurethane dispersions used as the graft base have a fluorine content of 5 to 30 %, relative to the solid.

3. Aqueous dispersions according to Claim 1, characterised in that the perfluoroalkyl monomers have the formula

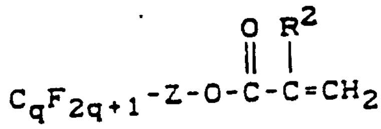

(VI)

in which

q represents the numbers 4 to 12,

$R^2$ represents hydrogen or methyl, and

Z represents the grouping

$-(CH_2)_m-$, $-O-(CH_2)_m-$ or

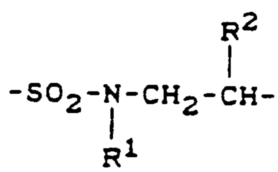

in which

m represents the numbers 1 to 4, and

$R^1$ represents $C_1$-$C_4$-alkyl.

**4.** Aqueous dispersions according to Claim 1, characterised in that the perfluoroalkyl-free monomers have the formulae

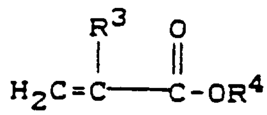

(VII)

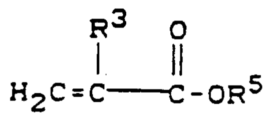

(VIIIa)

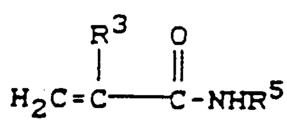

(VIIIb) and

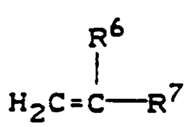

(VIIIc)

in which

$R^3$ represents hydrogen, methyl or fluorine,

$R^4$ represents $C_8$-$C_{22}$-alkyl,

$R^5$ represents $C_1$-$C_7$-alkyl,

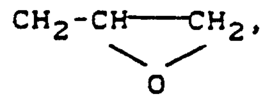

$-CH_2-OH$, $-CH_2-OCH_3$ or

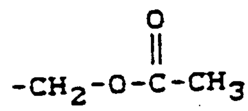

$R^6$ represents hydrogen, methyl, fluorine or chlorine, and
$R^7$ represents fluorine, chlorine, cyano, phenyl or

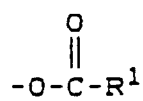

**5.** Aqueous dispersions according to Claims 1 and 4, characterised in that the perfluoroalkyl-free monomers used are vinyl esters, acrylic or methacrylic esters of $C_1$-$C_4$-alkanols or acrylic or methacrylic esters of $C_{12}$-$C_{22}$-alkanols.

**6.** Mixtures of aqueous dispersions according to Claims 1-5 and hydrophobic vinyl polymers (IX) or polycondensation products (X).

**7.** Mixtures according to Claim 6, characterised in that the hydrophobic vinyl polymers (IX) used are (meth)-acrylate copolymers containing at least one comonomer having a hydrophobic alkyl radical and the polycondensation products (X) used are urea resins and melamine resins.

**8.** Aqueous dispersions according to Claims 1-5, characterised in that hydrophobic vinyl polymers (IX) or polycondensation products (X) are used as additional graft bases.

**9.** Aqueous dispersions according to Claim 8, characterised in that the hydrophobic vinyl polymers (IX) and the polycondensation products (X) correspond to those described in Claim 7.

**10.** Use of aqueous dispersions according to Claims 1-9 for the finishing of natural or synthetic cellulose-, polyester-, polyamide- or polyacrylonitrile-containing materials.

**Revendications**

**1.** Dispersions aqueuses de copolymères et/ou copolymères greffés de monomères perfluoralkyliques à insaturation éthylénique et de monomères à insaturation éthylénique exempts de groupes perfluoralkyle, préparées par polymérisation en présence de dispersions aqueuses de polyuréthannes exemptes d'agents émulsionnants qui servent de supports de greffage, les polyuréthannes étant constitués des composants suivants :

A) des polyisocyanates organiques,
B) des esters partiels d'acides gras et de polyols,
C) des composés contenant des groupes perfluoralkyle et des atomes d'hydrogène actifs et
D) des composés contenant des atomes d'hydrogène actifs et des groupes salins ou des groupes convertibles en groupes salins.

**2.** Dispersions aqueuses selon la revendication 1, caractérisées en ce que les dispersions de polyuréthannes utilisées en tant que supports de greffage ont une teneur en fluor de 5 à 30 % sur les matières solides.

3. Dispersions aqueuses selon la revendication 1, caractérisées en ce que les monomères perfluoralkyliques répondent à la formule :

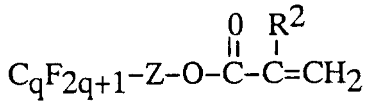 (VI)

dans laquelle
q est un nombre allant de 4 à 12,
$R^2$ représente l'hydrogène ou un groupe méthyle et
Z représente un groupement

$-(CH_2)_m-$, $-O-(CH_2)_m-$ ou 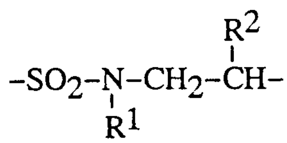

dans lequel
m est un nombre allant de 1 à 4 et
$R^1$ représente un groupe alkyle en $C_1$-$C_4$.

4. Dispersions aqueuses selon la revendication 1, caractérisées en ce que les monomères exempts de groupes perfluoralkyle répondent aux formules :

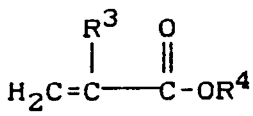 (VII)

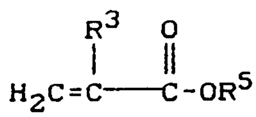 (VIIIa)

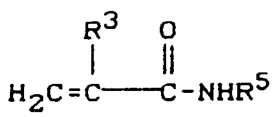 (VIIIb) et

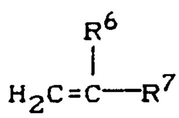 (VIIIc)

dans lesquelles
$R^3$ représente l'hydrogène, un groupe méthyle ou le fluor,
$R^4$ représente un groupe alkyle en $C_8$-$C_{22}$,
$R^5$ représente un groupe alkyle en $C_1$-$C_7$,

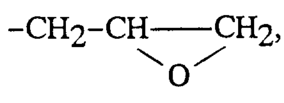

$-CH_2-OH$, $-CH_2-OCH_3$ ou

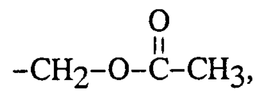

$R^6$ représente l'hydrogène, un groupe méthyle, le fluor ou le chlore et
$R^7$ représente le fluor, le chlore, un groupe cyano, phényle ou

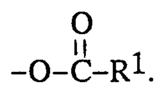

**5.** Dispersions aqueuses selon les revendications 1 et 4, caractérisées en ce que l'on utilise en tant que monomères exempts de groupes perfluoralkyle des esters vinyliques, des esters acryliques ou méthacryliques d'alcanols en $C_1$-$C_4$ ou des esters acryliques ou méthacryliques d'alcanols en $C_{12}$-$C_{22}$.

**6.** Mélanges de dispersions aqueuses selon les revendications 1 à 5 et de polymères vinyliques IX ou polycondensats X hydrophobes.

**7.** Mélanges selon la revendication 6, caractérisés en ce que l'on utilise en tant que polymères vinyliques hydrophobes IX des copolymères de (méth)acrylates contenant au moins un comonomère à groupe alkyle hydrophobe et en tant que polycondensats X des résines d'urée ou des résines de mélamine.

**8.** Dispersions aqueuses selon les revendications 1 à 5, caractérisées en ce que l'on utilise en tant que polymères greffés additionnels des polymères vinyliques hydrophobes IX ou des polycondensats X.

**9.** Dispersions aqueuses selon la revendication 8, caractérisées en ce que les polymères vinyliques hydrophobes IX et les polycondensats X sont ceux qui ont été décrits dans la revendication 8.

**10.** Utilisation de dispersions aqueuses selon les revendications 1 à 9, pour l'apprêtage de matières naturelles ou synthétiques contenant de la cellulose, des polyesters, des polyamides ou des polyacrylonitriles.